(19) Europäisches Patentamt

European Patent Office

Office européen des brevets

(11) EP 0 697 317 B1

(12) **EUROPÄISCHE PATENTSCHRIFT**

(45) Veröffentlichungstag und Bekanntmachung des Hinweises auf die Patenterteilung:
**24.03.1999 Patentblatt 1999/12**

(51) Int. Cl.⁶: **B60T 13/66**

(21) Anmeldenummer: **95109500.9**

(22) Anmeldetag: **20.06.1995**

(54) **Verfahren und Einrichtung zur Druckregelung**

Method and device for pressure control

Procédé et dispositif pour le contrôle de pression

(84) Benannte Vertragsstaaten:
**DE FR GB IT SE**

(30) Priorität: **16.08.1994 DE 4428929**

(43) Veröffentlichungstag der Anmeldung:
**21.02.1996 Patentblatt 1996/08**

(73) Patentinhaber: **WABCO GmbH**
**30453 Hannover (DE)**

(72) Erfinder: **Schappler, Hartmut**
**D-30455 Hannover (DE)**

(74) Vertreter: **Schrödter, Manfred**
**WABCO GmbH,**
**Am Lindener Hafen 21**
**30453 Hannover (DE)**

(56) Entgegenhaltungen:
| | |
|---|---|
| **EP-A- 0 075 657** | **EP-A- 0 188 686** |
| **EP-A- 0 226 803** | **EP-A- 0 233 360** |
| **EP-A- 0 408 844** | **DE-A- 2 732 298** |
| **DE-A- 3 636 140** | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Verfahren und eine Einrichtung zum Einstellen von Bremsdrücken in einem Fahrzeug, gemäß dem Oberbegriff der Patentansprüche 1 und 11.

Bei größeren Nutzfahrzeugen wird angestrebt, die Bremsen nicht mehr mittels eines pneumatischen Steuerdruckes anzusteuern, sondern die Signalübertragung elektrisch auszubilden. Hierdurch wird die Signalübertragung beschleunigt, und es ergeben sich leichtere Eingriffsmöglichkeiten zur weiteren Beeinflussung des Bremssignals.

Das Bremspedal gibt dabei bei Betätigung durch den Fahrer ein elektrisches Signal ab, das in einer Elektronik verarbeitet wird, und mit welchem mittels Magnetventilen der Bremsdruck in den Bremszylindern des Fahrzeuges einstellbar ist (DE 36 03 810 A1). Bei solchen elektrischen Bremssystemen müssen neben Anforderungen an die Sicherheit auch hohe Anforderungen an den Gleichlauf, die Wiederholbarkeit und die Genauigkeit der eingestellten Bremsdrücke gestellt werden. Falls zusätzlich ein Antiblockiersystem (ABS) oder eine Anfahrregelung (ASR) vorhanden ist, müssen die zur Drucksteuerung verwendeten Druck-Modulatoren bzw.

Magnetventile (MV) darüber hinaus auch noch sehr schnell arbeiten, um bei den üblichen Regelzyklen von 2 bis 5 pro Sekunde die gewünschten Drücke einstellen zu können.

Als Magnetventile können im einfachsten Falle schaltende Auf/Zu-Ventile benutzt werden, die elektrisch angesteuert entweder voll geöffnet oder voll geschlossen werden. Mit solchen Ventilen kann der Bremsdruck gesteigert, gehalten oder gesenkt werden. Die Bremsdruckänderungen erfolgen stufenförmig.

Es können aber auch sogenannte Druckmodulatoren eingesetzt werden, die in der Lage sind, die gewünschten Drücke analog einzustellen. Diese sind jedoch relativ teuer und nicht besonders schnell.

Schließlich können auch schaltende Magnetventile verwendet werden, die aber mit einer Frequenz elektrisch angesteuert werden, welche über der Eigenfrequenz (z. B. 30 Hz) liegt (EP 0 014 369 B1). Hiermit läßt sich das Magnetventil in einem relativ schmalen Arbeitsbereich als stetig steuerbare Drosselstelle betreiben. Der Regelkomfort wird gegenüber einem reinen Auf/Zu-Ventil erhöht, und die Abnutzung der Ventilsitze vermindert. Auf der anderen Seite ergeben sich aber erhebliche Probleme bei der Regelung, da ein derart angesteuertes Ventil stark totzeitbehaftet ist, eine starke Hysterese aufweist, nichtlinear ist und empfindlich auf Fertigungsstreuungen und Alterung reagiert. Die Funktion des Ventils wird außerdem auch von der Betriebstemperatur beeinflußt.

Weitere Probleme bei der Bremsdruckregelung oder -Steuerung in einem Nutzfahrzeug ergeben sich durch die Nichtlinearität der Übertragungsstrecke, d. h. der Rohr- und Schlauchleitungen, und des zu regelnden Volumens, also des Bremszylinders. So können z. B. in den Rohrleitungen bei großen Volumenstrom-Gradienten Druckschwingungen auftreten. Weitere Nichtlinearitäten ergeben sich dadurch, daß der Bremszylinder während des Betriebs ein stark veränderliches Volumen aufweist. Weiter treten auch bei geschlossenem Magnetventil im Bremszylinder Temperatur-Ausgleichseffekte auf, d. h. der Bremszylinderdruck ändert sich langsam bei Temperaturänderungen auch ohne Volumenstrom.

Der Erfindung liegt die Aufgabe zugrunde, eine Druckregeleinrichtung, insbesondere zum Einstellen von Bremsdrücken in einem Fahrzeug anzugeben, die mit schaltenden Magnetventilen arbeitet, und die in Bezug auf Regelgüte und -geschwindigkeit verbessert ist.

Diese Aufgabe wird durch die in den Patentansprüchen 1 und 11 angegebene Erfindung gelöst. Die Unteransprüche enthalten zweckmäßige Weiterbildungen.

Die Erfindung wird im folgenden anhand einer Zeichnung näher erläutert.

Die Figur 1 zeigt als schematisches Blockschaltbild ein elektrisches Bremssystem eines Fahrzeugs mit Regler.

Die Figuren 2 und 3 zeigen Diagramme, aus denen die Totzeit und das Hysterese-Verhalten der verwendeten Magnetventile (Einlaßventil EV und Auslaßventil AV) hervorgehen.

Die Figur 4 zeigt für einen typischen Bremszyklus den Bremszylinderdruck sowie die zugehörigen Massenströme und elektrischen Ströme vom Ein- und Auslaßventil.

Die Figur 5 zeigt als schematisches Blockschaltbild die Druckregeleinrichtung mit Kennlinienadaptation sowie die übrigen zum Regelkreis gehörenden Komponenten.

Die Figur 6 zeigt die bei einem Bremszyklus auftretenden Druckphasen sowie den erfindungsgemäßen Einlernvorgang zur Überwindung der Ansprechtotzone.

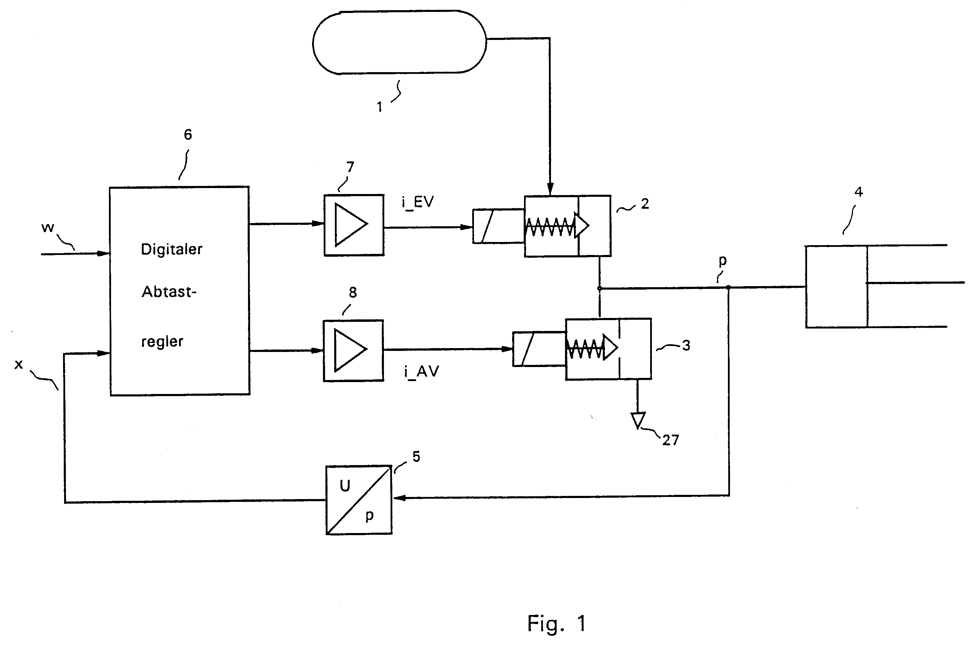

In der Figur 1 ist schematisch ein Blockschaltbild einer Druckregelanordnung dargestellt. In einem Bremszylinder (4) soll ein Bremsdruck eingestellt werden, welcher dem Wert einer Führungsgröße w möglichst schnell und genau folgt. Zur Drucksteigerung dient ein Einlaßventil (2), das als 2/2-Wege-Magnetventil ausgebildet ist, und einen Druckmittelvorrat (1) mit dem Bremszylinder (4) verbinden kann. Zur Druckabsenkung dient ein ebenfalls als 2/2-Wege-Magnetventil ausgebildetes Auslaßventil (3), das das im Bremszylinder (4) befindliche Druckmittel (Druckluft oder Öl) zu einem Auslaß (27) hin ableiten kann. Zum Druckhalten im Bremszylinder (4) sind beide Ventile (2, 3) geschlossen.

Der in der Bremszylinder-Leitung gemessene Ist-Druck p im Bremszylinder (4) wird einem Drucksensor (5) zugeleitet und dort in eine proportionale Ausgangsspannung umgewandelt. Diese wird als Istwert x einem digitalen Abtastregler (6) zugeleitet. Der Regler (6) vergleicht in bekannter Weise die Führungsgröße w mit dem Istwert x und gibt bei eventuellen Abweichungen entsprechende Steuersignale über Verstärker (7, 8) an die erwähnten Ventile (Einlaßventil 2 und Auslaßventil 3) ab, um einen eventuellen Unterschied zu minimieren. Der Regler (6) ist deshalb als Abtastregler bezeichnet, da er an seinen Eingängen Analog/Digitalwandler aufweist, und somit analoge Eingangssignale verarbeiten kann. Diese Signale werden in bekannter Weise abgetastet, und in eine Digitalzahl umgewandelt. Die weitere Verarbeitung erfolgt digital, d. h. per Rechenprogramm.

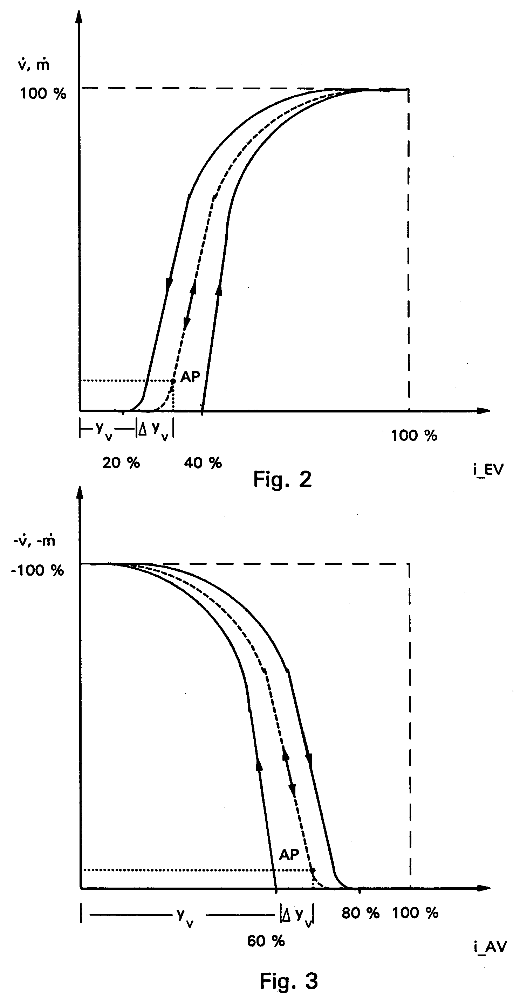

In der Figur 2 ist die Kennlinie des verwendeten Einlaßventils (EV) (2) dargestellt. Auf der Abzisse ist in normierter Form der Steuerstrom i von 0 bis 100 % aufgetragen. Auf der Ordinate ist ebenfalls normiert der Volumenstrom $\dot{v}$ bzw. Massenstrom $\dot{m}$ von 0 bis 100 % aufgetragen.

Wie man sieht, beginnt das Ventil infolge seiner Anfangs-Totzeit erst ab einer Ansteuerung von etwa i = 40 % zu öffnen. Bei steigendem Strom erfolgt die vollständige Öffnung zunächst linear, später nichtlinear, und zwar mit sinkendem Gradienten.

Beim Schließen ergibt sich dieselbe Nichtlinearität, wobei zusätzlich eine Hysterese auftritt. Bei einem Stromwert von etwa i = 20 % ist das Ventil wieder vollständig geschlossen.

Ein entsprechendes Öffnungs- bzw. Schließverhalten ergibt sich auch für das (ohne elektrische Ansteuerung offene) Auslaßventil (AV) (Figur 3).

Wie man aus den Figuren 2 und 3 erkennt, bringen die als Sitzventile ausgebildeten Einlaß- und Auslaßventile mit ihren großen Ansprechtotzonen bei jedem Beginn oder Wechseln einer Belüftungs- oder Entlüftungsdruckphase ein Totzeitverhalten in den Regelkreis ein. Erst beim Erreichen eines Öffnungsstromwertes von etwa 40 % des Strom-Maximalwertes im Betätigungsmagneten und einer entsprechenden erzeugten Undichtigkeit (Öffnung) der Dichtfläche beim Einlaßventil (EV) tritt ein Volumen-/Massenstrom ($\dot{v}$, $\dot{m}$) des verwendeten Druckmittels in der Bremsleitung auf.

Entsprechendes gilt für das Auslaßventil (AV), wo erst bei einer Stromabnahme auf etwa i = 60 % ein Volumen-/Massenstrom anfängt. Zum Schließen des Auslaßventils ist ein Strom von etwa i = 80 % nötig (Hysterese).

Die dargestellte Hysteresekurve gilt für eine langsame Ventil-Ansteuerung. Bei schneller Ansteuerung, wie sie im tatsächlichen Betrieb auftritt, gilt dagegen eine mittlere Kennlinie, die in den Fig. 2 und 3 gestrichelt eingezeichnet ist.

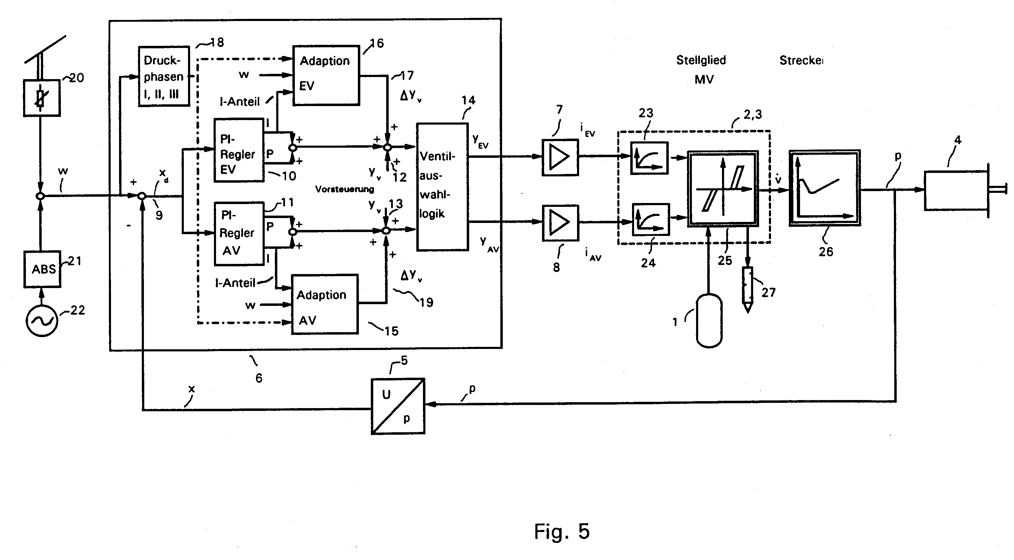

In den Fig. 2 und 3 sind ferner Vorsteuerströme $y_v$ und $\Delta y_v$ eingezeichnet, die dem Regler-Strom adaptiv hinzugefügt werden (siehe Fig. 5). Diese Strom-Werte sind nötig, um vom Ruhezustand des Ventils aus (i = 0) den Arbeitspunkt AP zu erreichen. Der Arbeitspunkt ist dabei der Zustand, wo der Dichtsitz des Ventils gerade öffnet (beim Einlaßventil EV) bzw. gerade schließt (beim Auslaßventil AV).

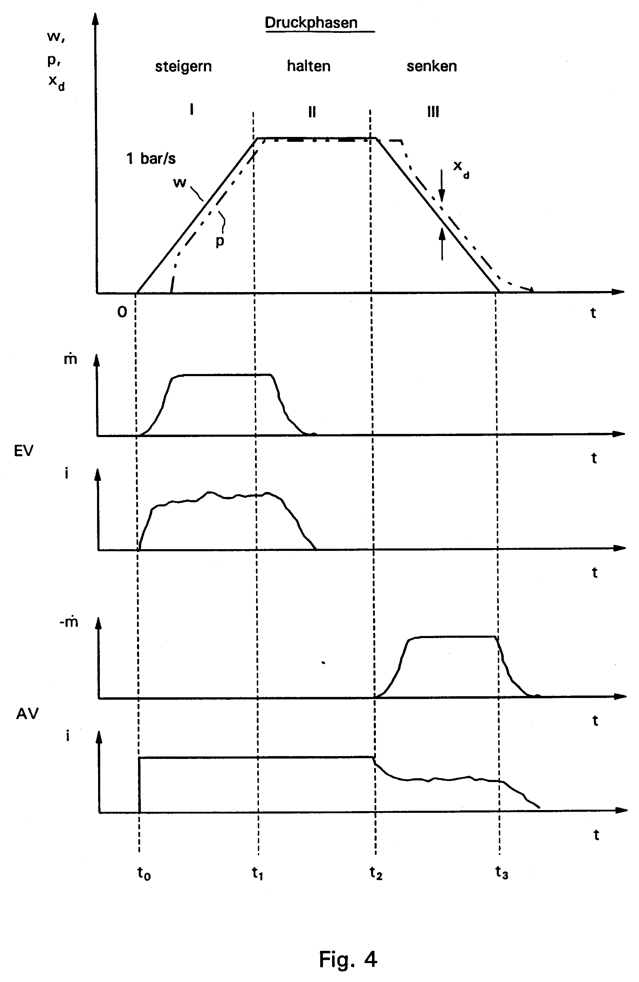

In der Fig. 4 (oben) ist über der Zeit t der Verlauf einer typischen Bremsung dargestellt. Diese besteht aus den drei Druckphasen steigern (I), halten (II) und senken (III). Dargestellt sind die Führungsgröße w, die vom Fahrer eingesteuert wird, der sich infolge des Regelvorgangs im Bremszylinder aufbauende Druck p, sowie die Regelabweichung $x_d$. Der dargestellte rampenförmige Verlauf ist typisch für den größten Teil aller Bremsvorgänge.

In der Fig. 4 (Mitte) ist der während des Bremsvorganges für das Einlaßventil (EV) auftretende Massenstrom $\dot{m}$ sowie der vom Regler (6) gelieferte Strom i durch das Ventil dargestellt. Wie man sieht, wird das Einlaßventil vom Zeitpunkt $t_0$ bis zum Zeitpunkt $t_1$ mit einem etwa konstanten Strom angesteuert. Das Ventil öffnet dadurch in eine mittlere Drosselstellung. Hierdurch ergibt sich ein ebenfalls konstanter Volumenstrom $\dot{m}$, wodurch der Druck p etwa linear ansteigt. Der Druckanstieg p ist wegen der Ventil-Hysterese und der Totzeiten in Ventil und Strecke gegenüber der Führungsgröße w verzögert.

Etwas anders sind die in der Fig. 4 (unten) dargestellten Verhältnisse beim Auslaßventil (AV), welches im Gegensatz zum Einlaßventil (EV) im nicht erregten (stromlosen) Zustand geöffnet ist (siehe Fig. 3). Dieses Ventil muß im Zeitpunkt $t_0$, also bei Beginn der Bremsung, durch einen vollen Strom (i = 100 %) geschlossen werden, damit sich ein Druck aufbauen kann. Im Zeitpunkt $t_2$, also bei Beginn des Druckabbaus, wird der Strom i gesenkt, so daß sich eine mittlere drosselnde Stellung im Bereich von $t_2$ bis $t_3$ (Ende der Bremsung) einstellt. Hierdurch ergibt sich ebenfalls ein mittlerer, etwa konstanter Volumenstrom $\dot{m}$. Damit ergibt sich ein etwa konstanter Druckabfall p.

Im mittleren Bereich zwischen $t_1$ und $t_2$ wird der Druck gehalten. In diesem Fall ist das Einlaßventil nicht angesteuert, d. h. geschlossen, während das Auslaßventil voll angesteuert ist, wodurch es ebenfalls geschlossen ist.

Im ungebremsten Betrieb, also vor $t_0$ und nach $t_3$, sind die beiden Ventile nicht elektrisch angesteuert. Dadurch ist das Einlaßventil geschlossen, und das Auslaßventil geöffnet.

In der Figur 5 ist das schematische Schaltbild der verwendeten erfindungsgemäßen Druckregeleinrichtung genauer dargestellt. In dieser Figur sind die Schaltungsblöcke, die die gleiche Funktion wie in dem Schaltbild nach Fig. 1 aufweisen, mit den gleichen Bezugszeichen wie in Fig. 1 dargestellt. Es handelt sich um eine Bremsdruckregelung in einem Nutzfahrzeug. Als Führungsgröße w wird dem Regler (6) das Signal eines sogenannten Trittplattenventils (20) zugeführt. Das Trittplattenventil (20) hat hier aber keinen pneumatischen, sondern einen elektrischen Ausgang, wobei die Ausgangsspannung z. B. analog der Stellung der Trittplatte bzw. dem Bremswunsch des Fahrers ist. Als weitere Führungsgröße wird das Ausgangssignal einer ABS-Elektronik (21) zugeführt, welche das Drehverhalten der Fahrzeugräder mittels Radsensoren (22) abtastet und bei erkanntem übermäßigen Bremsschlupf in bekannter Weise ein Signal zum Entlüften des zugehörigen Bremszylinders ausgibt. Durch geeignete Maßnahmen wird das Ausgangssignal der ABS-Elektronik (21) gegenüber dem Ausgangssignal des Trittplattenventils (20) bevorzugt weitergeleitet. Es können auch noch weitere Eingangsgrößen, beispielsweise das Signal einer Handbremse oder das Signal einer ALB (automatisch lastabhängige Bremse), überlagert werden (nicht dargestellt).

Der eigentliche Regler (6) vergleicht nun den Druck-Istwert p im Bremszylinder (4) nach Umwandlung in eine elektrische Größe x in einem Druck-Spannungswandler (5) mit der Führungsgröße w in einem Differenzbildner (9), wodurch sich die sogenannte Regelabweichung $x_d$ ergibt. Diese wird je einem üblichen PI-Regler (10, 11) für das Einlaßventil EV und das Auslaßventil AV zugeführt. Die Regler (10, 11) verstärken das Eingangssignal, also die Regelabweichung $x_d$, wobei die genaue Verstärkungs-Charakteristik bzw. Struktur des Reglers von einem Druckphasen-Detektor (18) umschaltbar ist. Der erwähnte Druckphasen-Detektor (18) erhält als Eingangssignal den Wert der Führungsgröße w und erkennt hieraus, welche Druckphase (Druckphase I = steigern, Druckphase II = halten, Druckphase III = senken) gerade ansteht. Dies wird aus einem Vergleich der aktuellen Führungsgröße mit der Vorgeschichte der Führungsgröße w, die im Druckphasendetektor (18) gespeichert ist, erkannt.

Die beiden Einzelregler (10) und (11) haben je zwei getrennte Ausgänge für ihren P (Proportional)-Anteil sowie für ihren I- (Integral)-Anteil. Die beiden Anteile jedes Reglers werden additiv zusammengefaßt und zu einer Vorsteuerung weitergeleitet. Hier wird dem Ausgangssignal des Reglers (10) ein stationärer Vorsteuerwert $y_v$ (Leitung (12)) sowie ein veränderlicher Vorsteuerwert $\Delta y_v$ (Leitung (17)) additiv zugefügt. Entsprechend wird dem Ausgangssignal des Reglers (11) für das Auslaßventil ein stationärer Vorsteuerwert $y_v$ (Leitung (13)) sowie ebenfalls ein veränderlicher Vorsteuerwert $\Delta y_v$ (Leitung (19)) additiv zugefügt.

Die stationären Vorsteuerwerte $y_v$ werden an Mustern der verwendeten Ventile empirisch ermittelt, so daß deren Arbeitspunkte AP bereits ungefähr erreicht werden. Der Zweck der Vorsteuerung ist es, den Arbeitspunkt (AP) der Ventile (siehe Fig. 2, 3) möglichst schnell zu erreichen, und somit die Regler (10, 11) von dieser Aufgabe zu entlasten. Hierdurch verkürzen sich die Regelzeiten.

Wie oben bereits erläutert, ist der Arbeitspunkt (AP) der Zustand, wo der Ventilsitz gerade abhebt, und wo somit der proportionale Bereich der verwendeten Schaltventile beginnt.

Bei Beginn einer Bremsung muß der Stromwert des Arbeitspunktes möglichst schnell erreicht werden. Hierzu wird der ständig anstehende Vorsteuerwert von einer Ventilauswahllogik (14) (siehe unten) bei Bremsbeginn sofort durchgesteuert.

Denkbar wäre, die benötigten genauen Vorsteuerströme am jeweiligen Ventil zu ermitteln, also z. B. das Abheben der Ventilsitze mit einem eingebauten Kraft- oder Wegsensor zu ertasten und die zugehörigen Ströme zu messen und abzuspeichern. Dieses Verfahren wäre jedoch zu ungenau bzw. zu aufwendig. Erfindungsgemäß wird deshalb ein anderes, nachstehend erläutertes Verfahren verwendet.

Die veränderlichen Vorsteuerwerte $\Delta y_v$ kommen über die Leitungen (17, 19) aus sogenannten Adaptionseinrichtungen (16, 15), welche an den jeweiligen I-Ausgang der Einzelregler (10, 11) angeschlossen sind und weiterhin den Wert der Führungsgröße w sowie das Ausgangssignal des Druckphasendetektors (18) erhalten. Die genaue Funktion der Adaptionseinrichtungen wird weiter unten näher erläutert.

Die derart durch die Vorsteuerung ergänzten Signale der beiden Einzelregler (10, 11) werden der Ventilauswahllogik (14) zugeführt. Diese entscheidet, welche Regelsignale zu den Stellgliedern (Einlaßventil (2), Auslaßventil (3)) hindurchgelassen werden.

Die Ausgangssignale der Ventilauswahllogik (14) $y_{EV}$ für das Einlaßventil EV und $y_{AV}$ für das Auslaßventil AV werden über zwei Verstärker (7, 8) als Stromwerte $i_{EV}$ und $i_{AV}$ dem eigentlichen Stellglied bzw. den Magnetventilen (2, 3) zugeleitet. Die Stellglieder (Modulatoren) haben eine nichtlineare Charakteristik, was durch die Diagramme (23, 24) angedeutet ist. Weiter ist auch eine Hysterese vorhanden, was durch das Diagramm (25) gezeigt werden soll.

An die Magnetventile sind ein Druckluftvorratsbehälter (1) sowie eine Auslaßöffnung (27) (Schalldämpfer) angeschlossen.

Die Stellglieder (2, 3) erzeugen einen Volumenstrom $\dot{v}$ (Luftstrom), welcher über Rohrleitungen oder Schläuche zum Bremszylinder (4) geführt wird. Das Diagramm (26) soll dabei die Charakteristik der durchlaufenen Strecke (Leitungen, Behälter) darstellen.

Der hierdurch im Bremszylinder (4) aufgebaute Luftdruck p wird im Druck/Spannungswandler (5) in eine Spannung umgewandelt und als Istwert x auf den bereits erwähnten Differenzbildner (9) zurückgeführt. Damit ist der Regelkreis geschlossen.

Im folgenden wird die Funktion der erfindungsgemäßen Vorsteuerung anhand der Figuren 2, 3, 5 und 6 näher erläutert.

Die in den Figuren 2 und 3 dargestellten Ventil-Kennlinien (durchgezogene Linien) gelten nur für eine stationäre (langsame) Anregung der Ventile.

Während eines laufenden Regelbetriebs gilt statt dessen die mittlere, gestrichelt dargestellte Kennlinie. Durch eine zusätzliche Zufügung eines Dither-Signals ist die Hysterese stark vermindert und nunmehr vernachlässigbar. Als Dither-Signal wird den Ventilströmen $i_{EV}$, $i_{AV}$ ein hochfrequenter Strom überlagert.

Die genaue Lage der gestrichelten Betriebs-Kennlinie kann von Ventil zu Ventil abweichen. Aus diesem Grund wird der genaue Betriebs-Arbeitspunkt (AP) für jedes Ventil während des Betriebs eingelernt. Dies erfolgt in den Adaptions-Einrichtungen (16, 15) (Figur 5), welche dem festen Vorsteuerwert $y_v$ einen jeweils individuell eingelernten Vorsteuerwert $\Delta y_v$ additiv hinzufügen.

Die individuellen Vorsteuerwerte $\Delta y_v$ werden wie folgt ermittelt.

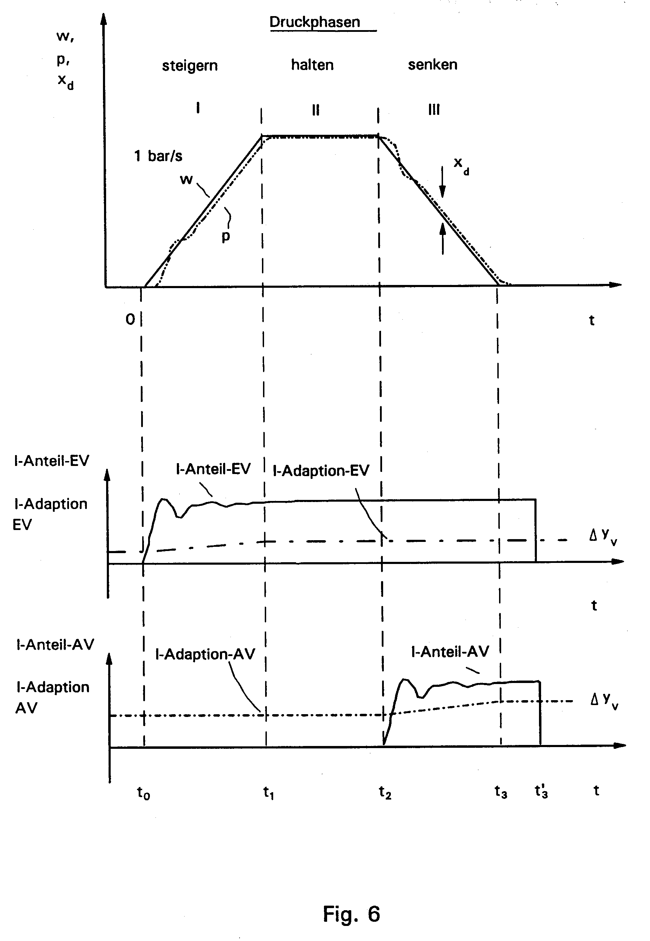

In der Fig. 6 ist im oberen Teil über der Zeit t wiederum der Verlauf einer typischen Bremsung dargestellt. Dieser besteht aus den drei Druckphasen steigern (I), halten (II) und senken (III). Während der Verlauf der Führungsgröße w trapezförmig ausgebildet ist, ergibt sich für den ausgeregelten Druck p (strichpunktiert) ein Verlauf, der der Führungsgröße w um die Differenz $x_d$ nacheilt (und zeitweise überschwingt)

Im unteren Teil der Fig. 6 ist, ebenfalls über der Zeit t, jeweils für das Einlaßventil EV und für das Auslaßventil AV der I-Anteil der Regler (10, 11) eingezeichnet. Wie man sieht, ist ab dem Zeitpunkt $t_0$ beim Druckanstieg im Ausgangssignal des Reglers (10) ein I-Anteil enthalten, der etwa rechteckförmig ausgebildet ist. Ab dem Zeitpunkt $t_1$ ist der I-Anteil etwa konstant. Zu diesem Zeitpunkt ist in der Druckhaltephase der Druck mit maximaler Genauigkeit ausgeregelt.

Sofern in der Druckhaltephase (II) keine größere Regelabweichung $x_d$ mehr auftritt, wird der Regler (10) für das Einlaßventil durch die Ventilauswahllogik (14) nicht mehr in den Regelbetrieb eingeschleift. Der I-Wert bleibt konstant, bis die Regelung insgesamt beendet ist ($t_3^{'}$), hat aber keinen Einfluß mehr auf den Druckverlauf. Nach ($t_3^{'}$) wird der I-Wert per Programm zu Null gesenkt.

Entsprechend ergibt sich für die Drucksenkungsphase (III) ein ähnlich ausgebildeter I-Anteil für das Auslaßventil AV, welcher von $t_2$ bis $t_3^{'}$ dauert. Ab $t_3^{'}$ ist der Druck mit ausreichender Genauigkeit wieder auf Null herabgeregelt. Der I-Anteil wird ebenfalls per Programm zu Null gesetzt.

In den Adaptionseinrichtungen (15, 16) werden nun die I-Anteile wiederum integriert. Dies erfolgt während etwa fünf bis zehn Bremsvorgängen. Das dadurch erhaltene Integrationsergebnis, welches in den Zeiträumen von $t_0$ bis $t_1$ (Druckanstieg) bzw. von $t_2$ bis $t_3$ (Drucksenkung) gewonnen wird, ist proportional dem einzulernenden Vorsteuerwert $\Delta y_v$.

In den beiden gezeichneten Fällen für das Einlaßventil und das Auslaßventil ergibt sich nach Abschluß der Bremsung jeweils eine Steigerung des vorherigen Wertes für $\Delta y_v$. Es ist aber auch möglich, daß sich der Wert für $\Delta y_v$ auch wieder verringert (bei negativem I-Anteil). In jedem Fall wird angenommen, daß nach etwa fünf bis zehn Bremsvorgängen ein brauchbarer Mittelwert erreicht ist, der in Verbindung mit dem festen Vorsteuerwert $y_v$ sehr nahe am tatsächlichen Arbeitspunkt des jeweiligen Ventils liegt, und sich nicht mehr wesentlich ändert. Dieser Wert $\Delta y_v$, der für das Einlaßventil EV und das Auslaßventil AV im allgemeinen einen unterschiedlichen Betrag hat, wird, wie oben bereits erläutert, dem festen Vorsteuerwert $y_v$ additiv hinzugefügt. Damit ergibt sich eine optimale, schnelle Einregelung der gewünschten Führungsgröße w.

Der beschriebene Einlernvorgang wird bei jedem Neustart des Fahrzeugs wiederholt. Er ist nach etwa 5 bis 10 Bremsungen beendet. Durch das ständige Neuberechnen von $\Delta y_v$ werden auch Temperatur-Einflüsse und Alterungsvorgänge des Ventils mit berücksichtigt und ausgeregelt.

Vorteilhafterweise kann der zuletzt berechnete $\Delta y_v$-Wert in einem Speicher (EEPROM) eingeschrieben werden und jeweils beim Neustart des Fahrzeugs zunächst verwendet werden.

Um für den Einlernvorgang ungünstige, extreme Zustände auszublenden, wird das Einlernen nur dann zugelassen, wenn die Bremsdruckänderungen des Sollwertes w in einem mittleren Bereich von etwa 0,25 bar/s bis etwa 2 bar/s liegen. Hierzu erhalten die Adaptionseinrichtungen (16, 15) den Ausgangswert des Druckphasendetektors (18), welcher diese Information enthält.

Ebenso wird das Einlernen nur dann zugelassen, wenn der Bremsdruck zwischen etwa 0,5 bar und 6 bar liegt (Normalbedingungen). Hierzu erhalten die Adaptionseinrichtungen (16, 15) weiter den Wert der Führungsgröße w. Hierdurch werden Regelbereiche mit instationären Einstellvorgängen oder mit zu geringem Versorgungsdruck am Ventil ausgeblendet.

Eingelernt wird stets der Betriebsarbeitspunkt des Ventils, das gerade aktiv in den Regelkreis eingeschleift ist. Dieses Ventil läßt sich durch das Ausgangssignal des Druckphasendetektors (18) ermitteln, da dieser die Druckphasen steigern, halten und senken unterscheidet.

Eine Adaption durch die Einrichtungen (15, 16) wird vorteilhaft nicht zugelassen bzw. angehalten, wenn mit den Druckmodulatoren (2, 3) ABS- oder ASR-Druckverläufe geregelt werden, da bei diesen Funktionen typischerweise große Regeldynamiken und Regelfehler auftreten.

Weiter wird die Adaption angehalten, wenn aufgrund der Zahlendarstellungsbereiche im Rechenwerk (Mikrocomputer) der Adaptionseinrichtungen (15, 16) eine Übersteuerung auftreten würde.

Schließlich wird eine Adaption nicht zugelassen, wenn die elektrische Betriebsspannung zum bestimmungsgemäßen Betrieb der Modulatoren (2, 3) zu gering ist.

Der ermittelte Vorsteuerwert $\Delta y_v$ kann auch innerhalb der Adaptionseinrichtungen (15, 16) auf die Einhaltung eines etwa konstanten Wertes überwacht werden. Sollten die neuen Werte größere Abweichungen von einem eingespeicherten Normalwert aufweisen, kann auf das Vorliegen eines Ventilfehlers geschlossen werden.

**Patentansprüche**

1. Verfahren zur Druckregelung zum Einstellen von Bremsdrücken in einem Fahrzeug, wobei mit schaltenden Magnetventilen (2, 3) mit stetig steuerbarem Bereich mit Hilfe von Einzelreglern (10, 11) ein vom Fahrer oder von anderen Einrichtungen (21) als Führungsgröße w vorgegebener Bremsdruck p ausgesteuert wird, dadurch gekennzeichnet, daß die Betriebsarbeitspunkte der Magnetventile (2, 3) mittels einer elektrischen Vorsteuerung (12, 17), (13, 19), die aus je einem konstanten Anteil $y_v$ und einem veränderlichen Anteil $\Delta y_v$ additiv zusammengesetzt ist, und die den Ausgangssignalen der Einzelregler (10, 11) hinzugefügt wird, anfahrbar sind, und daß die veränderlichen Anteile $\Delta y_v$ im Anschluß an einen Fahrzeugstart während der Dauer mehrerer Druckregelzyklen durch einen Einlernvorgang anpaßbar sind.

2. Verfahren nach Anspruch 1, dadurch gekennzeichnet, daß die veränderlichen Anteile $\Delta y_v$ als Integrationsergebnis der I-Anteile der Regler (10, 11) für die Dauer einer Drucksteigerung ($t_0$ bis $t_1$) für das Einlaßventil bzw. einer Drucksenkung ($t_2$ bis $t_3$) für das Auslaßventil ermittelt werden.

3. Verfahren nach Anspruch 2, dadurch gekennzeichnet, daß der Einlernvorgang des veränderlichen Anteils $\Delta y_v$ nach etwa fünf bis zehn Bremsvorgängen beendet wird, und der dann erreichte Wert als individueller, ventilspezifischer vorsteuerwert $\Delta y_v$ verwendet wird.

4. Verfahren nach Anspruch 1 - 3, dadurch gekennzeichnet, daß der Einlernvorgang nur dann durchgeführt wird, wenn die Änderungesgeschwindigkeit der Stellgröße w zwischen etwa 0,25 bar/s und 2 bar/s liegt.

5. Verfahren nach Anspruch 1 - 3, dadurch gekennzeichnet, daß der Einlernvorgang nur dann durchgeführt wird, wenn die Stellgröße w zwischen etwa 0,5 bar und 6 bar liegt.

6. Verfahren nach Anspruch 1 - 5, dadurch gekennzeichnet, daß der Einlernvorgang nicht durchgeführt bzw. angehalten wird, wenn ABS- oder ASR-Druckverläufe einzuregeln sind.

7. Verfahren nach Anspruch 1 - 6, dadurch gekennzeichnet, daß der Einlernvorgang dann nicht durchgeführt bzw. angehalten wird, wenn aufgrund der Zahlendarstellungsbereiche im Rechenwerk und der Vorzeichen der summierten Integrationswerte eine Übersteuerung der Adaptionseinrichtungen (15, 16) auftreten würde.

8. Verfahren nach Anspruch 1 - 7, dadurch gekennzeichnet, daß der Einlernvorgang nicht durchgeführt bzw. angehalten wird, wenn die Betriebsspannung zum Betrieb der Magnetventile (2, 3) zu gering ist.

9. Verfahren nach Anspruch 1 - 8, dadurch gekennzeichnet, daß der eingelernte Vorsteuerungswert $\Delta y_v$ jeweils beim Abschalten der Versorgungsspannung oder in festen Zeitabständen in einen nichtflüchtigen Speicherbaustein übertragen wird, und dieser Wert jeweils beim Neustart des Fahrzeugs zunächst verwendet wird.

10. Verfahren nach Anspruch 1 - 9, dadurch gekennzeichnet, daß eine Überwachung des Vorsteuerwertes $\Delta y_v$ durchgeführt wird und bei größeren Abweichungen von einem Normalwert auf das Vorliegen eines Ventilfehlers geschlossen wird.

11. Einrichtung zur Durchführung einer Druckregelung zum Einstellen von Bremsdrücken in einem Fahrzeug, wobei mit schaltenden Magnetventilen (2, 3) mit stetig steuerbarem Bereich mit Hilfe von Einzelreglern (10, 11) ein vom Fahrer oder von anderen Einrichtungen (21) als Führungsgröße w vorgegebener Bremsdruck p ausgesteuert wird, dadurch gekennzeichnet, daß je ein Einzelregler (10, 11) mit wenigstens einem P-Anteil und einem I-Anteil für das Einlaßventil EV und das Auslaßventil AV vorgesehen ist, deren I-Anteile separat abgreifbar sind,

daß die I-Anteile je einer Adaptionseinrichtung (15, 16) zuführbar sind, die als Integratoren mit kleinerer Integrationskonstante als die Integratoren der Einzelregler (10, 11) ausgebildet sind,

daß den Adaptionseinrichtungen (15, 16) zusätzlich der Wert der Führungsgröße w und das Ausgangssignal eines Druckphasendetektors (18) zugeführt ist,

und daß die Ausgänge der Adaptionseinrichtungen (15, 16) als veränderlicher Anteil $\Delta y_v$ über Leitungen (19, 17) additiv mit den Ausgängen der Einzelregler (10, 11) und den kon-

stanten Vorsteuerungen $y_v$ (12, 13) verbunden sind.

**Claims**

1. Method of pressure control for adjusting brake pressures in a vehicle, in which method a brake pressure p, given as control input w by the driver or by other devices (21), is regulated using switching magnetic valves (2, 3) that have a range that is constantly adjustable by means of individual controllers (10, 11), characterised in that the operational working points of the magnetic valves (2, 3) can be reached by means of an electrical pre-control (12, 17), (13, 19) which is in each case additively composed of a constant part $y_v$ and an alterable part $\Delta y_v$ and which is added to the output signals of the individual controllers (10, 11), and the alterable parts $\Delta y_v$ can be adapted by a learning process over the course of a number of pressure control cycles following start-up of the vehicle.

2. Method according to claim 1, characterised in that the alterable parts $\Delta y_v$ are determined as an integration result of the I-parts of the controllers (10, 11) for the duration of an increase in pressure ($t_0$ to $t_1$) for the inlet valve and for the duration of a decrease in pressure ($t_2$ to $t_3$) for the outlet valve.

3. Method according to claim 2, characterised in that the learning process of the alterable part $\Delta y_v$ is completed after approximately from five to ten braking operations, and the resulting value is used as an individual valve-specific pre-control value $\Delta y_v$.

4. Method according to claims 1 to 3, characterised in that the learning process is carried out only when the speed of change in the correcting variable w is from approximately 0.25 bar/s to 2 bar/s.

5. Method according to claims 1 to 3, characterised in that the learning process is carried out only when the correcting variable w is from approximately 0.5 bar to 6 bar.

6. Method according to claims 1 to 5, characterised in that the learning process is not carried out or is stopped when ABS or ASR pressure courses are to be regulated.

7. Method according to claims 1 to 6, characterised in that the learning process is not carried out or is stopped if overloading of the adaptation devices (15, 16) would occur because of the number notation ranges in the arithmetic unit or because of the operational signs of the added integration values.

8. Method according to claims 1 to 7, characterised in that the learning process is not carried out or is stopped when the operating voltage is too low for operation of the magnetic valves (2, 3).

9. Method according to claims 1 to 8, characterised in that each time the supply voltage is turned off or at fixed intervals the learned pre-control value $\Delta y_v$ is transferred to a non-volatile memory component, and that value is used first each time the vehicle is started up again.

10. Method according to claims 1 to 9, characterised in that monitoring of the precontrol value $\Delta y_v$ is carried out and if there are relatively large deviations from a normal value it is concluded that there is a fault in a valve.

11. Device for carrying out pressure control for adjusting brake pressures in a vehicle, in which device a brake pressure p, given as control input w by the driver or by other devices (21), is regulated using switching magnetic valves (2, 3) that have a range that is constantly adjustable by means of individual controllers (10, 11), characterised in that each individual controller (10, 11) is provided with at least one P-part and one I-part for the inlet valve IV and the outlet valve OV, the I-parts of which can be captured separately,

    the I-parts can each be supplied to an adaptation device (15, 16), which adaptation devices are in the form of integrators having smaller integration constants than the integrators of the individual controllers (10, 11),

    the control input value w and the output signal from a pressure phase detector (18) are additionally supplied to the adaptation devices (15, 16), and

    the outputs of the adaptation devices (15, 16), as alterable part $\Delta y_v$, are connected additively *via* lines (19, 17) to the outputs of the individual controllers (10, 11) and to the constant pre-controls $y_v$ (12, 13).

**Revendications**

1. Procédé de régulation de pression pour régler des pressions de freinage dans un véhicule, dans lequel une pression de freinage p prédéterminée par le conducteur ou par d'autres dispositifs (21) est régulée comme grandeur pilote w au moyen de soupapes magnétiques a commutation (2, 3) dans une plage à commande continue à l'aide de régulateurs individuels (10, 11), caractérisé en ce que les points de fonctionnement des soupapes magnétiques (2, 3) sont pilotables au moyen d'une commande pilote électrique (12, 17), (13, 19) qui est composée de façon additive par une part contante $y_v$ et par une part variable $\Delta y_v$ et qui est ajoutée aux signaux de sortie des régulateurs individuels (10, 11), et en ce que les parts variables $\Delta y_v$ sont adaptables par une opération d'apprentissage pendant la durée de plusieurs cycles de régulation de pression suite à un démarrage du véhicule.

2. Procédé selon la revendication 1, caractérisé en ce que les parts variables $\Delta y_v$ sont détectées en tant que résultat d'intégration des parts intégrales des régulateurs (10, 11) pour la durée d'une augmentation de pression ($t_0$ à $t_1$) pour la soupape d'entrée ou d'un abaissement de pression ($t_2$ à $t_3$) pour la soupape de sortie.

3. Procédé selon la revendication 2, caractérisé en ce que l'opération d'apprentissage de la part variable $\Delta y_v$ est achevée approximativement après cinq ou dix opérations de freinage, et la valeur alors obtenue est utilisée comme valeur de commande pilote $\Delta y_v$ individuelle spécifique à la soupape.

4. Procédé selon l'une quelconque des revendications 1 à 3, caractérisé en ce que l'opération d'apprentissage est effectuée uniquement lorsque la vitesse de modification de la grandeur de réglage $\underline{w}$ est comprise entre environ 0,25 bar/s à 2 bar/s.

5. Procédé selon l'une quelconque des revendications 1 à 3, caractérisé en ce que l'opération d'apprentissage est effectuée uniquement lorsque la grandeur de réglage $\underline{w}$ est comprise entre environ 0,5 bar à 6 bar.

6. Procédé selon l'une quelconque des revendications 1 à 5, caractérisé en ce que l'opération d'apprentissage n'est pas effectuée ou bien est interrompue si l'on doit procéder à la régulation d'évolutions de pression anti-blocage ou anti-patinage.

7. Procédé selon l'une quelconque des revendications 1 à 6, caractérisé en ce que l'opération d'apprentissage n'est pas effectuée ou bien est interrompue si une surrégulation des dispositifs d'adaptation (15, 16) se produirait en raison des plages de représentation chiffrées dans l'unité de calcul et des signes des valeurs d'intégration sommées.

8. Procédé selon l'une quelconque des revendications 1 à 7, caractérisé en ce que l'opération d'apprentissage n'est pas effectuée ou bien est interrompue si la tension de fonctionnement est trop faible pour le fonctionnement des soupapes magnétiques (2, 3).

9. Procédé selon l'une quelconque des revendications 1 à 8, caractérisé en ce que la valeur apprise de commande pilote $\Delta y_v$ est transmise dans un composant de mémoire non volatile lors de la coupure de la tension d'alimentation ou à des intervalles de temps fixes, et en ce que cette valeur est utilisée tout d'abord lors d'un nouveau démarrage du véhicule.

10. Procédé selon l'une quelconque des revendications 1 à 9, caractérisé en ce qu'une surveillance de la valeur de commande pilote $\Delta y_v$ est effectuée et en ce que la présence d'un défaut de soupape est déduite en cas d'écarts importants par rapport à une valeur normale.

11. Dispositif pour mettre en oeuvre une régulation de pression pour régler des pressions de freinage dans un véhicule, dans lequel une pression de freinage $\underline{p}$ prédéterminée par le conducteur ou par d'autres dispositifs (21) est régulée comme grandeur pilote $\underline{w}$ au moyen de soupapes magnétiques à commutation (2, 3) dans une plage à commande continue à l'aide de régulateurs individuels (10, 11), caractérisé en ce qu'il est prévu un régulateur individuel respectif (10, 11) avec au moins une part proportionnelle et une part intégrale pour la soupape d'entrée SE et pour la soupape de sortie SS, dont les parts intégrales peuvent être saisies séparément, en ce que les parts intégrales sont susceptibles d'être amenées chacune à un dispositif d'adaptation (15, 16), qui sont réalisés sous forme d'intégrateurs avec une constante d'intégration inférieure à celle des intégrateurs des régulateurs individuels (10, 11), en ce que la valeur de la grandeur pilote $\underline{w}$ et le signal de sortie d'un détecteur de phase de pression (18) sont amenés en supplément aux dispositifs d'adaptation (15, 16), et en ce que les sorties des dispositifs d'adaptation (15, 16) sont combinées en tant que part variable $\Delta y_v$ via des lignes (19, 17) de façon additive aux sorties des régulateurs individuels (10, 11) et aux commandes pilotes constantes $y_v$ (12, 13).

Fig. 1

Fig. 2

Fig. 3

Fig. 4

Fig. 5

Fig. 6